# EUROPEAN PATENT APPLICATION

(11) **EP 3 936 486 A1**
(43) Date of publication of application: **12.01.2022**
(21) Application number: 21183843.8
(22) Date of filing: 06.07.2021
(51) Int. Cl.: C03C 17/30, C08K 3/36, C08L 83/04, C09D 183/04, C09D 1/00

(54) **A BINDER FOR COMPOSITE FIBRE MATERIALS, A COMPOSITE FIBRE MATERIAL WITH A BINDER AND A METHOD FOR PREPARING A COMPOSITE FIBRE MATERIAL WITH A BINDER**

(30) Priority: 09.07.2020 PL 43460120
(71) Applicant: Mariusz Borowiecki Poldecco, 65-722 Zielona Gora (PL)
(72) Inventor: Mariusz Borowiecki Poldecco, 65-722 Zielona Gora (PL)
(74) Representative: Kancelaria Eupatent.pl Sp. z.o.o

(57) **Abstract**

A binder comprising water and solids for use in producing composite fibre materials, the binder comprises: an aqueous silica sol having an alkaline pH and comprising from 15 to 50% of solids, wherein the aqueous silica sol contains not less than 90% by weight of amorphous silica (SiO₂) based on a total solids content in said sol, wherein an average particle size of silica is between 5 and 500 nm, and a binding agent in an amount from 1 to 100 parts by weight for each 1000 parts by weight of the aqueous silica sol, wherein the binding agent comprises an oligomeric siloxane according to Formula I:

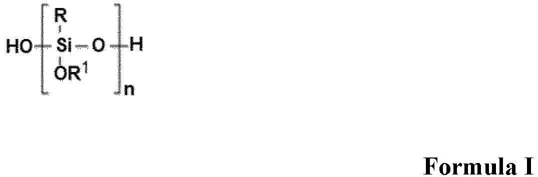

## Description

### TECHNICAL FIELD

This invention relates to a binder for composite fibre materials, a composite fibre material with the addition of said binder, and a method for preparing a composite fibre material using said binder.

### BACKGROUND

Composite fibre materials can be used as fibre preforms, also known as fibre mats, which are intermediates that constitute three-dimensional reinforcements to be impregnated with resin in the production process of resin composites. Moreover, composite fibre materials can be used as ready-to-use products: fibre fillers with insulating properties, including acoustic, thermal, electrical and/or fire insulation, such as for example fillers for car muffler housings, or glass wool.

Composite fibre materials contain fibres as staples or in continuous form, typically pneumatically texturised with an air jet, and then bonded together with a binder to form a loosely packed fibre structure.

Known fibres used for composite fibre materials include, but are not limited to, glass, carbon, aramid or mineral fibres.

Glass fibres used in the manufacture of composite fibre materials are obtained from water glass or molten glass, which is passed through a nozzle and drawn as threads that are stretched to the appropriate thickness. The diameter of a single glass fibre typically ranges from 3 to 24 µm. Glass fibres have a relatively high tensile strength with a low longitudinal tensile modulus and high shear tensile modulus. The deformation of the glass fibre is elastic, and the elastic limit generally correlates with the breaking strength. In addition to strength, the main advantages of glass fibres include high hardness, high corrosion resistance, thermal and electrical insulation and chemical inertness. Moreover, glass fibre does not burn, and the original strength of the fibre is reduced by 50% only after the fibre is heated for 24 hours at 400 °C. Furthermore, at temperatures below 0 °C glass fibre retains its functional properties, while at temperatures down to -50 °C it shows no visible change in mechanical properties.

Mineral fibres, in turn, are typically a mixture of silicon oxide (SiO₂) and aluminium oxide (Al₂O₃) in various ratios with optional mineral additions. Composite fibre materials made of mineral fibres are typically used as thermal, electrical, acoustic or fire insulation.

Depending on the needs and the intended use of the composite fibre material, the fibres used to manufacture it can have the form of for example bundles, consisting of a large number of single continuous filaments which can be twisted together for example to form yarn, or untwisted, for example, to form a roving, which is one of the commonly used fibre forms for manufacturing composite fibre materials. Moreover, the fibres for composites can be staple fibres or chopped fibres, which are used to make various types of mats.

The final mechanical properties of composite fibre materials depend on their production technology and on their geometrical structure, i.e. the form of the filament and its distribution.

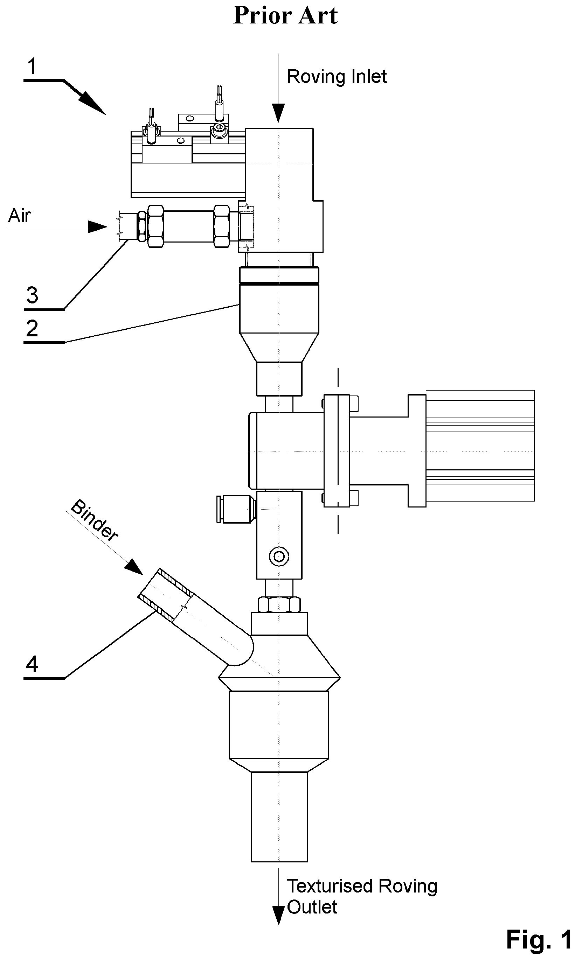

Composite fibre materials constituting fillings for car muffler housings are typically made from a continuous roving, i.e. a single continuous bundle of rovings, typically glass fibres, which are pneumatically texturised i.e. defibered, and then bonded using a binder to form a moulding with an irregular structure of loosely packed fibres or the defibered roving. The roving is typically defibered in the texturising nozzle 1, the structure of which is shown schematically in Fig. 1. Nozzle 1 has a diffusion chamber 2 with a supply of compressed air 3 to the inside of the diffusion chamber 2 so that the roving is being texturised. Once it leaves the diffusion chamber 2, a binder is applied onto the texturised roving through the inlet 4. The fibres with the binder applied as described are then inserted into the mould and the binder is cured. This ensures sufficient mechanical strength of the fibre composite material operating at high temperatures and at varying exhaust outlet pressure - inside the car muffler housing.

Patent literature also discloses various methods for producing composite fibre materials, including those designed for housing fillings in car mufflers.

European patent publication EP2480391 discloses a method for curing a porous prefabricated muffler consisting of a plurality of glass fibres and a thermosetting or thermoplastic material applied over these fibres. In the method, the prefabricated muffler is placed in a chamber with first pressure, which is closed and steam is pumped into the chamber, directing it through the deflecting surfaces inside the chamber directly onto the prefabricated muffler.

International Patent Publication WO2014062943, in turn, discloses a binder for a fibrous glass fibre preform to be used in mufflers and a method for producing it, wherein a measured amount of continuous glass fibre and compressed air is introduced into a texturising nozzle and, due to the Venturi effect, the air in the nozzle defibres the glass fibre strands directly at the outlet. Moreover, a binder is prepared in a separate container and pumped into the texturising nozzle so that at each point along or downstream of the texturising process, the binder is applied to the surface of the glass fibres, so that the binder is evenly distributed over the surface of the glass fibres and the process is carried out in one continuous step. The process uses e.g. a binder based on sodium silicates (Na₂O/SiO₂), colloidal silica and clay.

European patent publication EP0692616, in turn, discloses a method for producing a continuous glass fibre preform designed for soundproofing padding for car muffler covers, wherein continuous glass fibres are introduced into a perforated mould and the fibres are passed through a texturising apparatus which defibres the fibres to a wool-like form, followed by a binder in powder form being introduced into the mould, and this is subjected to hot pressure in order to crosslink the binder to fuse the defibered glass fibres.

### SUMMARY OF THE INVENTION

As follows from the above-cited patent publications, the composition and method for producing composite fibre materials are constantly modified in order to improve the properties of these materials. Such modifications include both the composition of the binder and the method for producing said materials.

Therefore, there is a need to develop a binder composition providing additional improvement in the strength properties of composite fibre materials produced with the addition of said binder. The developed binder composition should allow for streamlining the process of production of composite fibrous materials, including the reduction of the phenomenon of the binder getting stuck in the texturising nozzle during the pneumatic defibring process.

The object of the invention is a binder comprising water and solids for use in producing composite fibre materials, wherein the binder comprises: an aqueous silica sol having an alkaline pH and comprising from 15 to 50% of solids, wherein the aqueous silica sol contains not less than 90% by weight of amorphous silica (Si02) based on a total solids content in said sol, wherein an average particle size of silica is between 5 and 500 nm, and a binding agent in an amount from 1 to 100 parts by weight for each 1000 parts by weight of the aqueous silica sol, wherein the binding agent comprises an oligomeric siloxane according to Formula I: 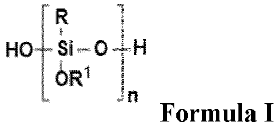 wherein: R, - R¹ are substituents independently selected from a group of hydrogen and linear or branched alkyl groups containing from 1 to 10 carbon atoms in the substituent; n - is a value from 2 to 300,
wherein the total solids content of the binder is from 1 to 95% of the total weight of the binder, and wherein the binder has a dynamic viscosity from 0.89 to 1200 mPa·s measured at a temperature of 20 °C.

Preferably, the binding agent comprises an oligomeric siloxane according to Formula II: 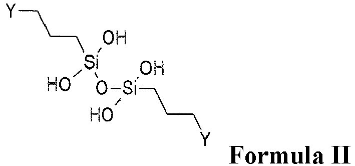 wherein: Y is an alkyl substituent selected from the group consisting of: -R, -R¹,-O-R, and -O-R¹.

Preferably, the binding agent further comprises at least one trialkoxysilane and/or a salt thereof with alkali metal ions selected from the group consisting of: lithium (Li⁺), sodium (Na⁺) and potassium (K⁺) ions, in an amount not exceeding 50% by weight of the binding agent.

Preferably, the binder comprises tripotassium propylsilanetriolate as the salt of trialkoxysilane with metal ions.

Preferably, the binder comprises a pH adjuster for adjusting the pH level of the binder to a value ranging from 7.5 to 12, selected from the group consisting of: a sodium alkali (NaOH) and a potassium alkali (KOH).

Preferably, the binder further comprises spherical anhydrous silica (SiO₂) having a BET specific surface area ranging from 80 to 350 g/m² and an average size of spherical silica particles in the range of 7 to 14 nm, in an amount not exceeding 10% by weight of the binder.

Preferably, the binder further comprises an aqueous dispersion of silica (SiO₂) having silica content ranging from 1 to 50% by weight and stabilised by at least one substance selected from the group consisting of: potassium alkali (KOH), sodium alkali (NaOH), ammonia, dimethylaminoethanol, dimethylaminoamine, cationic polymers and phosphates, in an amount not exceeding 15% by weight of the binder.

Preferably, the binder further comprises a functional oligomeric organosiloxane in a total quantity not exceeding 15 by weight of the binder, according to Formula III and/or Formula IV:

HO-[SiR²(OH)-O]ₐ-[SiR³(OH)-O]_{b}-H **Formula III**

HO-[SiR²(OH)-O]ₐ-[SiR³(OH)-O]_{b}-[Si(OH)₂-O]_{c}-H **Formula IV**

wherein: R² and R³ are substituents independently selected from linear or branched unsubstituted alkyl moieties, or substituted with at least one moiety selected from the group consisting of: alkylamino, arylamino, glycidyl, alkyl diamine, alkyltriamine substituents, hydrolysed N-alkyl moiety, glycidyl, methacryloxy, acrylic, vinyl, aryl, fluoroalkyl, and poly(ethylene oxide); **a, b** and **c** are each independently less than 300, wherein each of **a, b** and **c** independently ranges from 0 to 300.

Preferably, the binder further comprises at least one additional component selected from the group consisting of: dyes, pigments, iron (III) oxide (Fe₂O₃), titanium (IV) oxide (TiO₂), surfactants and organic solvents.

Another object of the invention is a composite fibre material comprising continuous and/or staple fibres selected from the group consisting of: glass fibres, carbon fibres, mineral fibres and aramid fibres, wherein the fibres of the composite fibre material are connected by a cured binder of the binder composition as described above.

Preferably, the composite fibre material comprises fibres in a form of a texturised roving.

Preferably, composite fibre material comprises the binder in an amount from 0.01 to 3 parts by weight per 100 parts by weight of the fibres.

Preferably, the composite fibre material has a density in the range of 100 to 400 kg/m³.

Preferably, the composite fibre material has a form of a felt.

Yet another object of the invention is a method of preparing a composite fibre material, the method comprising: texturizing continuous and/or staple fibres selected from the group consisting of: glass fibres, carbon fibres, mineral fibres and aramid fibres, and bonding said fibres with a binder to produce a composite fibre material having a loosely packed fibre structure, wherein the step of applying the binder of the composition as described above, onto the fibres during texturizing of the fibres, is accomplished by compressed air in a texturising nozzle, and the step of curing the binder, coating the texturized fibres, is accomplished by evaporation of the binder solvent at a temperature ranging from 80 to 300 °C.

Preferably, the method comprises using compressed air at a pressure of 2 to 8 bar for texturizing the fibres on which the binder is applied.

Preferably, the method comprises mixing the binder with compressed air before texturizing the fibres with compressed air in the texturising nozzle.

Preferably, the method comprises carrying out the curing for the time required for the binder to be cured in a closed mould with a hot air supply.

Preferably, the method comprises producing the composite fibrous material in the form of a felt.

Preferably, the method comprises producing felt fittings as a result of curing the binder.

### BRIEF DESCRIPTION OF DRAWINGS

The object of the invention is shown in the embodiments in the drawing where:
Fig. 1 is a prior art texturising nozzle design for pneumatic defibring of fibres using known binder compositions;
Fig. 2 is an embodiment of a texturising nozzle for pneumatic defibring of fibres using a binder of the invention, in a front view (Fig. 2A) and in a cross-sectional view (Fig. 2B);
Fig. 3 shows photographs of composite fibre materials containing texturised fibres, produced by the inventive method.

### DETAILED DESCRIPTION

The developed binder composition is suitable e.g. for producing composite fibre materials using glass fibres, mineral fibres, carbon fibres or aramid fibres, as well as composite fibre materials comprising at least two different types of fibres of those above, including staple and/or continuous fibres, for example as roving.

The developed composition of the binder and its consistency as well as the developed method for applying said binder onto fibres during the production of composite fibre materials provided better coverage of fibres with the binder and adequate filling of the spaces between fibres during their texturisation with compressed air - in the process of producing the composite material, which improved the mechanical properties of the obtained composite material, such as in particular improved resistance to tearing and delamination and to the detachment of fibre fragments from the composite material, including under varying pressure and at high temperatures, for example when using it as padding in a car muffler housing where the material comes into contact with engine exhaust gases (exhaust).

Moreover, the binder has a limited emission level of volatile organic compounds into the atmosphere due to the developed composition thereof. This is due i.a. to the use in this binder of water as a solvent and binding agents based on oligomeric siloxanes, which are macromolecular compounds based on silicon and oxygen that are crosslinked as the binder cures, without emitting volatile organic compounds. As a result, composite fibre materials based on the developed binder are eco-friendly.

The developed binder is an aqueous binder and it is composed of an aqueous silica sol, a binding agent, water as a solvent and optional additives, as described in detail below.

### Characteristics of aqueous silica sol as a binder component:

an aqueous silica sol containing 15 to 50% solids in sol, wherein the sol contains amorphous silica (SiO₂) as major solids in an amount of not less than 90 wt% based on the total solids content of said sol, more preferably in an amount of SiO₂ ranging from 99.6 to 99.9% based on the total solids content of said sol, with the addition of an alkali metal oxide: M₂O, such as Na₂O, in an amount of said oxide ranging from 0.1 to 0.4 wt%, with an average size of colloidal particles (dispersed phase) in this sol in the range from 5 to 500 nm, more preferably from 5 to 300 nm, and with an alkaline pH, more preferably in the range from 7.5 to 10;
preferably, anionic silica sols with an alkaline pH may be used, in which the dispersed phase is in the form of spherical or slightly irregular particles with a negative charge stabilized by cations, such as sodium cations (Na⁺).

Preferably, a silica sol with a solids content ranging from 15 to 50% may be used; in particular, using a sol with a solids content of less than 15% to produce the binder would result in limited binding of the binder, and, consequently, in poor mechanical properties of the composite fibre material, while a solids content of more than 50% in the sol would result in gelling thereof to impede the rheology of the binder.

A monodisperse silica sol, or more preferably a polydisperse silica sol, being a mixture of a plurality of silica sols, and therefore characterised by a variety of average colloidal particle sizes in the range from 5 to 500 nm, more preferably in the range from 5 to 300 nm, or even more preferably in the range from 5 to 150 nm, most preferably in the range from 5 to 100 nm, may be used to produce the binder. In other words, the aqueous silica sol that makes part of the binder preferably contains a number of colloidal particle fractions varying in size within the above range. It increases the density of the binder. This is due to the possibility of denser packing of colloidal particles, namely the spaces between larger colloidal particles are filled with colloidal particles having a smaller diameter. The higher binder density thus obtained results in improved adhesion to the substrates to be bonded, which in turn improves fibre bonding and better mechanical properties of the fibrous composite material.

Aqueous silica sol used as a binder may for example be Sizol 030 from Rudniki (Rudniki, Poland), or Levasil, Nouryon (Amsterdam, The Netherlands).

### Characteristics of the binding agent of the binder:

the binding agent of the binder contains at least one oligomeric siloxane of Formula I: 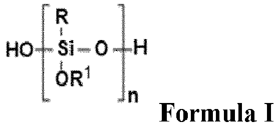 where:
   R, R¹ - are substituents independently selected from the group of hydrogen and linear or branched alkyl groups containing from 1 to 10 carbon atoms and preferably containing from 2 to 5 carbon atoms in the substituent;
   n - is a value between 2 and 300, more preferably between 2 and 50;
in a preferred embodiment of the binder, compounds according to Formula II may be used as oligomeric siloxanes: 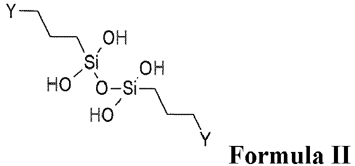 where:
   Y is an alkyl group, such as R and/or R¹, and/or an alkoxy group, such as: -O-R, -O-R¹.

The total amount of binding agent contained in the binder is between 1 and 100 parts by weight of binding agent per 1000 parts by weight of the aqueous silica sol. This amount of binding agent provides improved binder properties once it is cured. An amount of the crosslinking agent less than the indicated one could hinder the properties of the binder after curing, while an excessive amount of the binding agent could result in the binder becoming gelled.

The binding agent in the binder may preferably further comprise at least one alkyltrialkoxysilane and/or a salt thereof with at least one type of alkali metal ion selected from the group consisting of lithium (Li⁺), sodium (Na⁺) and potassium (K⁺) ions, such as tripotassium propylsilanetriolate, in an amount of up to 50 wt % based on the total weight of the binding agent in the binder. Compounds of Formula II may undergo further oligomerisation to Formula I, and/or react with compounds of Formula I when the binder is being cured.

The binding agent used in the binder may for example be PROTECTOSIL 808W or PROTECTOSIL WS 405 A from Evonik (Essen, Germany).

The binder according to the developed composition is an aqueous binder having a total solids content in said binder in the range from 1 to 95 wt%, preferably in the range from 20 to 30%, and a dynamic viscosity preferably from 0.89 to 1200 mPa·s, measured at a temperature of 20 °C. The solids content of the binder may be adjusted by adding water.

Alternatively, alkaline compounds, preferably strong alkalis such as KOH or NaOH, may be introduced into the binder to adjust the pH of the binder to a level between 7.5 and 12.

The binder of the developed composition features higher fluidity and lower specific gravity compared to the traditionally used binders of this type which are based on organic resins. Thus, in the pneumatic fibre texturisation process carried out at the step of producing composite fibre materials, the binder in the form of a mist produced as a result of the interaction of the binder with pressurised air is distributed onto the fibre surface more evenly, forming a thinner binder layer on the fibre surface, which translates to improved bonding. Moreover, the binder with the developed composition protects the fibres during the texturising step to ensure a proper load distribution between the individual fibres and limit unwanted fibre breakage.

The binder may further contain additional ingredients, including:
- spherical anhydrous silica (SiO₂), preferably with an average particle size in the range from 7 to 14 nm, obtained through flame hydrolysis of silicon tetrachloride (SiCl₄) according to the following reaction: 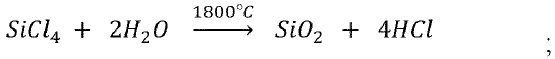 preferably, spherical anhydrous silica with a BET specific surface area in the range from 80 to 350 g/m² is used.
   Spherical anhydrous silica is an amorphous synthetic product having an excellent purity (SiO₂), found in the form of aggregates or agglomerates and it features developed specific surface area. In the binder composition, this component acts as a filler, a gelling agent, while also improving the resistance of the binder to higher temperatures, improving the stability of the binder composition, promoting its crosslinking, and ensuring its appropriate fluidity. Spherical anhydrous silica may constitute up to 10% by weight of the total weight of the binder. For example, the following product can be used as spherical anhydrous silica: AEROSIL, Evonik (Essen, Germany); and/or
- an aqueous dispersion of silica (SiO₂) of at least one type having a silica content in the aqueous dispersion in the range from 1 to 50% by weight, preferably from 5 to 50% by weight, selected from the group consisting of aqueous alkaline silica dispersion, aqueous acid silica dispersion and aqueous cationic silica dispersion, namely aqueous dispersions in which the silica is stabilised by at least one substance selected from the group consisting of an alkali such as, for example, KOH and/or NaOH, ammonia, dimethylaminoethanol, dimethylaminoamine, cationic polymers and phosphates. The aqueous silica dispersion may constitute up to 15% by weight based on the total weight of the binder. For example, the aqueous dispersion of silica used may be: AERODISP W7520 P, Evonik (Essen, Germany); and/or
- at least one oligomeric functional organosiloxane according to Formula III and/or Formula IV which are shown below:

   HO-[SiR²(OH)-O]ₐ-[SiR³(OH)-O]_{b}-H **Formula III**

   HO-[SiR²(OH)-O]ₐ-[SiR³(OH)-O]_{b}-[Si(OH)₂-O]_{c}-H **Formula IV**

   where:
   R² and R³ are substituents independently selected from linear or branched unsubstituted alkyl groups or comprising at least one functional substituent selected from the group consisting of alkylamino, arylamino, glycidyl, alkyl diamine, alkyl triamine, hydrolysed: N-alkyl, glycidyl, methacryloxy, acrylic, vinyl, aryl, fluoroalkyl groups, and poly(ethylene oxide); wherein
   **a, b** and **c** are each independently less than 300, wherein each of the a, b and c values is independently between 0 and 300; and preferably each of the a, b and c values is less than 150, more preferably each of these values is less than 80, or even more preferably each of these values is less than 40; and also preferably the sum of the a, b and c values (a+b+c) is preferably less than 300, more preferably less than 100, or even more preferably less than 50.
      The oligomeric functional organosiloxanes according to Formula III and/or IV may amount as a total up to 15 wt% based on the total weight of the binder. As additives in the binder, these compounds provide improved adhesion to the fibres. Preferably, compounds may be used in the form of aqueous solutions, optionally with a slight addition of alcohol, such as ethanol in an amount not exceeding 200 ppm, wherein oligomer concentration in said solution is preferably in the range of 40 to 80 wt%. For example, the following products may be used as a donor for oligomeric functional organosiloxanes: HYDROSIL Dynasylate 2926 and/or HYDROSIL Dynasylate 2627, Evonik (Essen, Germany); and/or
- optional additives selected from the group of dyes, pigments, such as inorganic pigments such as iron (III) oxide Fe₂O₃, titanium (IV) oxide (TiO₂) or dispersions thereof, and/or
- at least one surfactant, and/or a functional surface treatment agent such as a finished product hydrophobisation agent, and/or an organic solvent such as, for example, methanol and/or ethanol, in order to obtain appropriate fluidity and/or adhesion properties of the composition to the selected substrates.

The binder may be stored at room temperature in a closed vessel in order to limit air ageing; under these conditions, the binder remains stable for several months, and it can be used during all this period.

The binder undergoes curing involving evaporation of water and cross-linking (polymerisation) of the components of the binding agent under alkaline conditions, preferably at a pH in the range of 7.5 to 12. Preferably, the binder may be cured at an increased temperature in the range of 80 to 300 °C, for example by supplying hot air to the binder, which promotes water evaporation and improves strength parameters of the binder after curing.

Moreover, optional binder additives such as spherical anhydrous silica and aqueous silica dispersions further improve mechanical strength properties of the binder, as well as its rheology, stability and adhesion to the fibres of the composite material.

Preferably, spherical anhydrous silica and aqueous silica dispersions may be used in a total amount of 0.01 to 100 parts by weight of said ingredients per 1000 parts by weight of silica sol, with their weight percentages in the binder matching these indicated above.

The binder is prepared by mixing all the components in the ratios as above, preferably at a temperature not higher than 40 °C. For example, the binder may be prepared under ambient conditions at room temperature. Preferably, in order to obtain a binder, water is introduced to an aqueous silica sol or a mixture of various silica sols, for example differing in the particle size of the dispersed phase, to obtain an appropriate solids content in said sol ranging from 0.1 to 55%. A solution of the binding agent with water is then prepared, preferably with a binding agent:water ratio by volume from 1:10 to 1:100, followed by adding the obtained solution of the binding agent with water to the obtained solution of the silica sol and water. If the binding agent is added to the sol directly, it could result in the formation of sol lumps that are difficult to break down, which would mean a non-uniform, and therefore undesirable, binder consistency. This, however, may be prevented by pre-mixing the binder with water.

The additives are successively added after the mixture of aqueous solvent and aqueous solution of the binder is prepared as above. The pH value of the mixture is monitored throughout the binder production step, and, optionally, an alkali is added if the measured pH value is below the target value in the range between 7.5 and 12.

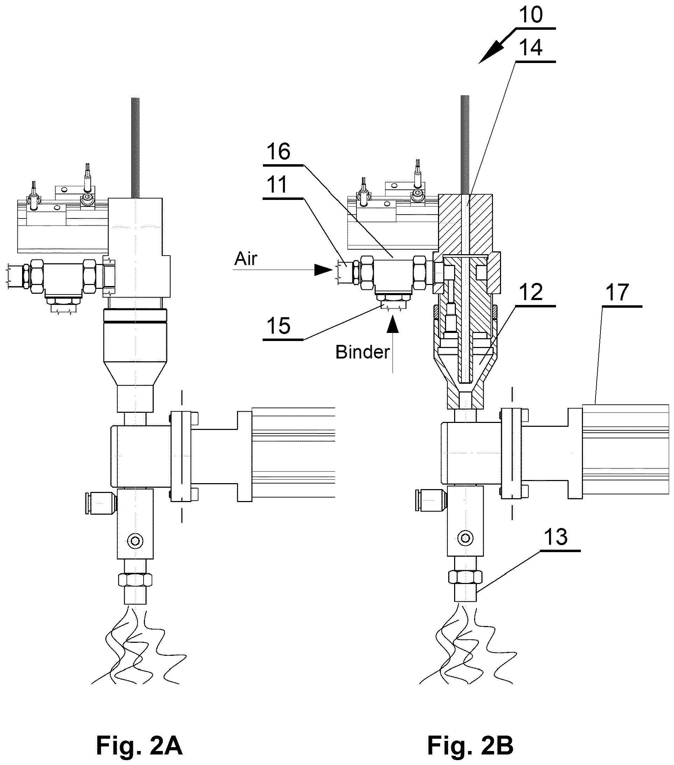

Fig. 2 is a structure of a texturising nozzle 10 for implementing the method according to the present invention, in view: Fig. 2A and in longitudinal cross-section: Fig. 2B and a schematic representation of how fibres are texturised into composite fibrous materials using the inventive binder composition with the composition as described above.

Fibres, such as glass or mineral fibres, including those containing 94 to 99% SiO₂ with an optional addition of Al₂O₃, or, for example, glass fibres of the ECR type (without addition of boron), or mineral, aramid or carbon fibres, or a mixture of at least two types of different fibres in the form of a roving, are introduced into the texturising nozzle 10, through the inlet 14, and the fibres are collected from the nozzle in the defibered form through the outlet 13. The texturising nozzle 10 has a Venturi tube design with an inlet section having a smaller cross section, a diffusion chamber 12 having a variable cross section larger than the cross section of the inlet section of the nozzle 10 and a volume of the diffusion chamber 12 larger than the volume of the nozzle 10 at the inlet 14. This design allows for the texturisation of the fibres in the diffusion chamber 12, brought about by a sudden drop in pressure.

According to the developed solution, prior to being introduced into the diffusion chamber 12, the texturising air is mixed with the binder in the inlet chamber 16 which is provided with a compressed air supply 11 and a binder supply 15, while the resulting air-binder mixture from the inlet chamber 16 is fed to the diffusion chamber 12, which mixture at the inlet to the diffusion chamber 12 (in the Venturi tube) is atomised to form very fine binder droplets suspended in the texturising air, i.e. a mist, which in the diffusion chamber 12 is used to treat the fibres in the form of a roving so that it is defibered. The amount of binder introduced through the binder feed 15 is selected so that the content of the binder in the finished product, namely the composite fibrous material is preferably between 0.01 and 3 parts by weight of binder per each 100 parts by weight of fibres. Preferably, the binder is continuously fed into the inlet chamber 16, in order to obtain an even coverage of the fibres with it at the step of texturising them.

The introduction of the binder directly with the texturising air into the diffusion chamber 12 of the texturising nozzle 10 was allowed by the developed composition of the binder, which is an aqueous binder and has a relatively low viscosity compared to known resin-based binders. Such sufficiently low viscosity binder, together with the texturising air, diffuses in the chamber 12 to form a mist which, inside the texturising nozzle 10, interacts with the fibres at the step of the texturisation thereof.

Preferably, air is supplied to the inlet chamber 16 at a pressure of 2 to 8 bars, depending on the target degree of defibering and the fibre material.

As a result of such process, in which the roving is being defibered by a jet of air with droplets of binder suspended therein, i.e. in the form of a mist, the texturisation of the fibres occurs under conditions in which the space between the fibres in the roving is more thoroughly filled with binder, and the binder better coats the fibres. This ensures limited breakage and chipping of fibre segments during defibering and yields a texturised roving with improved performance characteristics. Following the texturisation, the roving leaves the chamber 12 and exits the nozzle 10 through the outlet 13. Optionally, after leaving the diffusion chamber 12, the texturised roving may be cut into fibres of the appropriate length using cutting mechanism 17.

The texturised roving is then placed in a mould, which is closed and heated to cure the binder. Preferably, the heating may be carried out by blowing the mould with hot air at a temperature in the range from 80 to 300 °C, preferably at a temperature of 80 °C. Optionally, the binder can be cured using vacuum or microwave drying techniques. Furthermore, once the binder is cured, the composite fibrous material may optionally be annealed at a temperature of not less than 500 °C, more preferably at a temperature of not less than 550 °C in order to remove traces of volatile organic compounds from the article.

The composite fibre material, obtained by curing the binder and optional annealing the whole, has a structure of loosely packed and fused texturised fibres. The shape of the product reflects the mould cavity. The density of the composite fibre material, which defines the packing density of the fibres within it, may vary depending on the intended use of the material, and may range from 50 to 400 kg/m³.

The shape and dimensions of the composite fibre material may vary. For example, the composite fibre material may take the form of a cylindrical or oval fitting for use, for example, as a cladding for an exhaust pipe of a car muffler inside its housing, or of cuboid blocks for use, for example, as a wall cladding acting as thermal and/or acoustic insulation, such as glass wool for materials made of glass fibres.

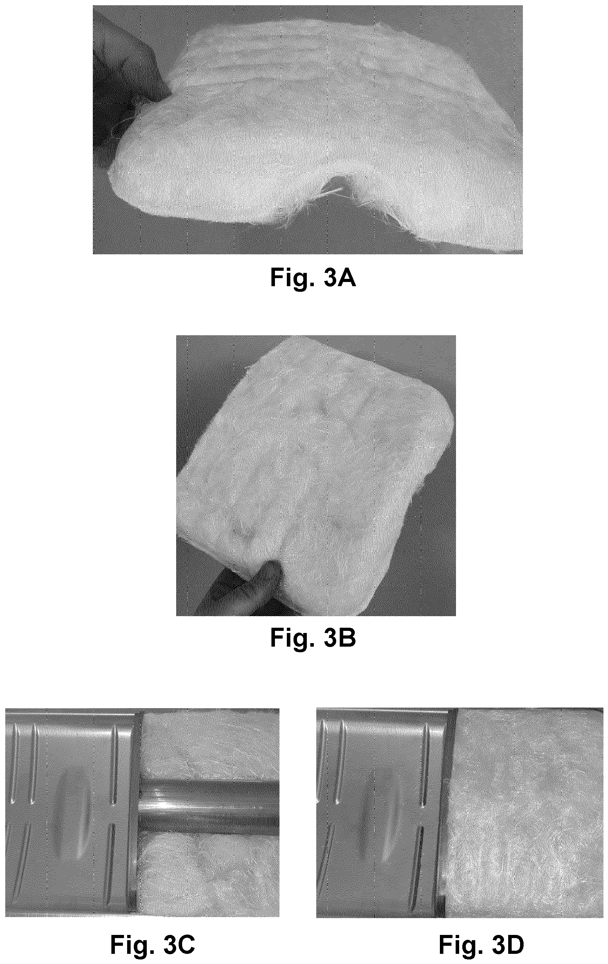

Figs. 3A - 3D are photographs of the composite fibre material obtained using the developed method. Fig. 3A shows the composite fibre material that constitutes a half of the filler of a car muffler housing with a duct for the muffler pipe. Fig. 4B shows a composite fibre material with a cuboidal shape. Figs. 3C and 3D, in turn, show a car muffler housing with a filler made of a form of the composite fibre material obtained using the developed method.

The developed binder can further be used as a binding material in the production of felts, such as felts used in the automotive industry for thermal insulation, including certain automotive engine components and/or associated components. Such felts may take the form of composite fibre materials containing fibres connected by the inventive binder. Such felts can be obtained by soaking the fibres with a binder and subjecting this to a hot pressing process in a mould of a pre-determined cavity shape. This yields a variety of felt workpieces with shapes reflecting the shape of the mould cavity. Such felt fittings may be used, for example, as thermal insulation components in the engine exhaust system, thus protecting other automotive parts from the adverse effects of high exhaust gas temperatures, while ensuring high fuel combustion and after-combustion temperatures in the engine and at the engine outlet, including, for example, in the catalytic converter. Felt materials of this type, based on a binder with the developed composition, due to its significantly reduced emission of organic substances into the atmosphere, achieve improved performance characteristics of felt components, particularly in terms of their environmental impact.

The developed composition of the binder and the method of its application: in the form of a mist, at the step of fibre texturisation, more than protecting fibres from unwanted crumbling, it also allows for conducting the process of roving defibring in milder conditions of reduced pressure, while achieving a defibring sufficient to produce the composite material. Furthermore, due to the aqueous base of the binder and its suitable rheology, during the texturising process the binder does not cause blockages of the texturising nozzle 10 at the outlet 13, thereby increasing process fluidity and production yield.

### EMBODIMENT 1 - Binder and fibrous composite material preparation

The binder was obtained by preparing a polydisperse mixture of aqueous silica sols that varied in the size of the colloidal silica particles, so as to obtain a greater dispersion of the fraction of the dispersed phase of the sol. Accordingly, the following aqueous silica sols were mixed:
- 2,5 parts by weight of sol with a silica content of 50% and an average particle size of the dispersed phase of 55 nm,
- 2,5 parts by weight of sol with a silica content of 50% and an average particle size of the dispersed phase of 150 nm,
- 2 parts by weight of sol with a silica content of 30% and an average particle size of the dispersed phase of 6 nm,
- 2 parts by weight of sol with a silica content of 40% and an average particle size of the dispersed phase of 14 nm,
- 1 part by weight of sol with a silica content of 15% and an average particle size of the dispersed phase of 4 nm,
to give a total of 10 parts by weight of aqueous silica sol with an alkaline pH of 10. 2 litres of water were then introduced to 2 litres of the mixture of aqueous silica sols as above and mixed, and then an aqueous solution of the binding agent Protectosil 808W by Evonik, in a quantity of 0.5 1 of the ingredient: Protectosil 808W and 0.5 1 of water were added thereto, which was then stirred, controlling the pH of the mixture, followed by adding 0.5 1 more water to the mixture and stirring again.

The resulting binder, together with texturising air at 4 bar pressure, was then fed onto a continuous roving of ECR glass fibre, followed by texturisation with a mist jet: air-binder, in the texturising nozzle. The texturised roving was placed in the mould cavity with the hot air supply connected, followed by blowing air at 150 °C for 5 minutes, followed by removing from the mould cavity the finished product, i.e. a composite fibrous material for use in car muffler paddings as a noise damping and thermal insulation material.

### EMBODIMENT 2 - Binder preparation

The binder was prepared using silica sols with high water content and relatively low silica content. For this purpose, a mixture of aqueous silica sols was prepared that consisted of:
- 8.0 parts by weight of a silica sol with a silica content of 30% and an average particle size of the dispersed phase of 6 nm, and
- 2.0 parts by weight of a sol with a silica content of 50% and an average particle size of the dispersed phase of 150 nm.
0.5 litre of water were then added to 2 litres of the mixture of aqueous silica sols as above and mixed, and then an aqueous solution of the binding agent Protectosil 808W by Evonik in the quantity of 0.2 L of Protectosil 808W and 0.2 of water were added thereto, which was mixed while controlling the pH of the mixture. To this, an additive to improve adhesion to the fibre was then added: Evonik's Dynasylane at 2 g, and 3 g of spherical anhydrous silica: Aerosil 2000 by Evonik.

## Claims

1. A binder comprising water and solids for use in producing composite fibre materials, **characterised in that** the binder comprises:
- an aqueous silica sol having an alkaline pH and comprising from 15 to 50% of solids, wherein the aqueous silica sol contains not less than 90% by weight of amorphous silica (Si02) based on a total solids content in said sol, wherein an average particle size of silica is between 5 and 500 nm, and
- a binding agent in an amount from 1 to 100 parts by weight for each 1000 parts by weight of the aqueous silica sol, wherein the binding agent comprises an oligomeric siloxane according to Formula I: 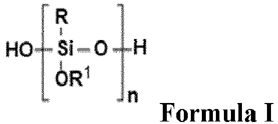 wherein:
- R, - R¹ are substituents independently selected from a group of hydrogen and linear or branched alkyl groups containing from 1 to 10 carbon atoms in the substituent;
n - is a value from 2 to 300,
wherein the total solids content of the binder is from 1 to 95% of the total weight of the binder, and wherein the binder has a dynamic viscosity from 0.89 to 1200 mPa·s measured at a temperature of 20 °C.

2. The binder according to claim 1, wherein the binding agent comprises an oligomeric siloxane according to Formula II: 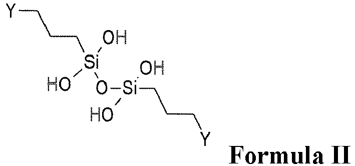 wherein:
Y is an alkyl substituent selected from the group consisting of: -R, -R¹,-O-R, and -O-R¹.

3. The binder according to claim 1 or 2, wherein the binding agent further comprises at least one trialkoxysilane and/or a salt thereof with alkali metal ions selected from the group consisting of lithium (Li⁺), sodium (Na⁺) and potassium (K⁺) ions, in an amount not exceeding 50% by weight of the binding agent.

4. The binder according to claim 3, comprising tripotassium propylsilanetriolate as the salt of trialkoxysilane with metal ion.

5. The binder according to any one of the preceding claims, comprising a pH adjuster for adjusting the pH level of the binder to a value ranging from 7.5 to 12, selected from the group consisting of a sodium alkali (NaOH) and a potassium alkali (KOH).

6. The binder according to any one of the preceding claims, further comprising spherical anhydrous silica (SiO₂) having a BET specific surface area ranging from 80 to 350 g/m² and an average size of spherical silica particles in the range of 7 to 14 nm, in an amount not exceeding 10% by weight of the binder.

7. The binder according to any one of the preceding claims, further comprising an aqueous dispersion of silica (SiO₂) having silica content ranging from 1 to 50% by weight and stabilised by at least one substance selected from the group consisting of potassium alkali (KOH), sodium alkali (NaOH), ammonia, dimethylaminoethanol, dimethylaminoamine, cationic polymers and phosphates, in an amount not exceeding 15% by weight of the binder.

8. The binder according to any one of the preceding claims, further comprising a functional oligomeric organosiloxane in a total quantity not exceeding 15% by weight of the binder, according to Formula III and/or Formula IV:
HO-[SiR²(OH)-O]ₐ-[SiR³(OH)-O]_{b}-H **Formula III**
HO-[SiR²(OH)-O]ₐ-[SiR³(OH)-O]_{b}-[Si(OH)₂-O]_{c}-H **Formula IV**
wherein:
R² and R³ are substituents independently selected from linear or branched unsubstituted alkyl moieties, or substituted with at least one moiety selected from the group consisting of: alkylamino, arylamino, glycidyl, alkyl diamine, alkyltriamine substituents, hydrolysed N-alkyl moiety, glycidyl, methacryloxy, acrylic, vinyl, aryl, fluoroalkyl, and poly(ethylene oxide),
**a, b** and **c** are each independently less than 300, wherein each of **a, b** and **c** independently ranges from 0 to 300.

9. A composite fibre material comprising continuous fibres and/or staple fibres and/or fibres in a form of texturized roving selected from the group consisting of: glass fibres, carbon fibres, mineral fibres and aramid fibres, **characterised in that** the fibres of the composite fibre material are connected by a cured binder having a composition according to any one of the claims 1 to 8.

10. The composite fibre material according to claim 9 comprising the binder in an amount from 0.01 to 3 parts by weight per 100 parts by weight of the fibres.

11. The composite fibre material according to claim 9 or 10, having a form of a felt.

12. A method of preparing a composite fibre material, the method comprising:
texturizing continuous and/or staple fibres selected from the group consisting of: glass fibres, carbon fibres, mineral fibres and aramid fibres , and
bonding said fibres with a binder to produce a composite fibre material having a loosely packed fibre structure,
the method is **characterised by**:
applying the binder of the composition according to any of claims 1 to 8 onto the fibres during texturizing of the fibres, wherein said applying is accomplished by compressed air in a texturising nozzle, and
curing the binder coating the texturized fibres, by evaporation of the binder solvent at a temperature ranging from 80 to 300 °C.

13. The method according to claim 12, comprising mixing the binder with compressed air before texturizing the fibres with compressed air in the texturising nozzle.

14. The method according to claim 12 or 13, comprising producing the composite fibrous material in the form of a felt.

15. The method according to claim 14, comprising producing felt fittings as a result of curing the binder.
